# EUROPEAN PATENT APPLICATION

(11) **EP 4 755 674 A1**
(43) Date of publication of application: **10.06.2026**
(21) Application number: 25219674.6
(22) Date of filing: 01.12.2025
(51) Int. Cl.: B60H 1/32, B60H 1/00

(54) **MOTOR VEHICLE**

(30) Priority: 03.12.2024 IT 202400027339
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Motor vehicle (1) comprising a body defining a passenger compartment (3), a first circuit (20) capable of being flown by a cooling fluid and comprising a first heat exchanger (24) which can be supplied with the cooling fluid and adapted to allow the cooling fluid to release heat, a second circuit (50) fluidly connected with the passenger compartment (3), the second circuit (50) comprises an inlet (51), which can fluidly be connected to the passenger compartment (3) and which can be supplied with an air stream to be cooled, and an outlet (52) which can fluidly be connected to the passenger compartment (3) and capable of being flown by the cooled air stream, a third circuit (60) capable of being flown by a heat transfer fluid and thermally coupled with the first and second circuits (20, 50), the first heat exchanger (24) being interposed along the third circuit (60) so as to cool the heat transfer fluid.

## Description

### CROSS-REFERENCE TO RELATED APPLICATIONS

This patent application claims priority from Italian patent application no. 102024000027339 filed on December 3, 2024, the entire disclosure of which is incorporated herein by reference.

### TECHNICAL FIELD

The present invention relates to a motor vehicle.

### BACKGROUND

The motor vehicles comprise in a known way an air conditioning system, which is adapted to extract or introduce heat into the passenger compartment so as to maintain a desired temperature value inside the passenger compartment itself, with temperatures in the environment outside the motor vehicle varying for example between -30 °C and 50 °C.

This extraction or introduction of heat takes place respectively through the delivery inside the passenger compartment of "cold" air or "hot" air at respective temperatures that are lower or higher than that existing in the passenger compartment itself.

According to a commonly used solution, the air conditioning system produces "cold" air to be sent into the passenger compartment through a vapour compression refrigeration cycle also known as the "Vapour cycle", in which a cooling fluid different from air undergoes a sequence of thermodynamic transformations. In particular, the cooling fluid, for example R134a, undergoes a liquid-vapor phase change during the vapour compression cycle and must, therefore, be able to evaporate at low temperatures of the order of a few tens of degrees below 0 °C and at pressures above atmospheric pressure, and to condense at temperatures of the order of 50-115 °C at not too high pressures.

In this known solution, the air conditioning system comprises:
- a first closed circuit, through which the cooling fluid flow and along which the vapour compression cycle is carried out; and
- a second circuit fluidly connected to the motor vehicle and capable of being flown by the recirculated air to and from the passenger compartment itself.

In greater detail, the first circuit comprises, in sequence:
- a compressor, which compresses the cooling fluid in the vapour phase;
- a condenser, which determines the transition of the cooling fluid from the vapour phase to the liquid phase;
- a lamination valve, which determines the transition of the cooling fluid to a two-phase condition formed by a mixture of vapour liquid; and
- an evaporator, which determines the transition of the cooling fluid from the two-phase condition to a vapour phase.

In particular, the cooling fluid absorbs heat from the outside inside the evaporator and releases it to the outside inside the condenser.

The second circuit comprises an inlet and a plurality of outlet vents fluidly connected to the passenger compartment and a fan to create a circulation of air from the inlet to the outlet.

The evaporator is interposed along the second circuit in a position interposed between the inlet and the outlet vents.

In this way, the evaporator removes heat from the hot air coming from the inlet of the second circuit. Consequently, the cooled air reaches the outlet vents of the second circuit and the passenger compartment of the motor vehicle.

In the solutions of known type, the second circuit is housed inside an engine compartment of the motor vehicle, i.e. near the passenger compartment.

Recent anti-pollution regulations limit the use of the cooling fluid R134a.

As an alternative to the cooling fluid R134a, the use of propane has been proposed, as this cooling fluid allows the overall weight of the second circuit to be reduced.

However, due to the high flammability of propane, it is necessary to protect the second circuit from impacts that could favour the ignition of fires near the passenger compartment.

The need to use cooling fluids, such as propane, in the air conditioning systems for motor vehicle is felt in the sector, reducing as much as possible or even completely eliminating the risk of igniting fires in the cooling fluid itself.

### SUMMARY

Aim of the present invention is the realization of a motor vehicle, which allows to satisfy the aforesaid need.

The aforesaid aim is achieved by the present invention, as it relates to a motor vehicle as defined by claim 1.

### BRIEF DESCRIPTION OF THE DRAWINGS

For a better understanding of the present invention, a preferred embodiment is described below, by way of nonlimiting example and with reference to the accompanying drawings, wherein:
- Figure 1 is a perspective view of a motor vehicle comprising an air conditioning system realized according to the dictates of the present invention;
- Figure 2 is a perspective view on an enlarged scale of a rear portion of the motor vehicle of Figure 1 according to a first visual angle and with parts removed for clarity;

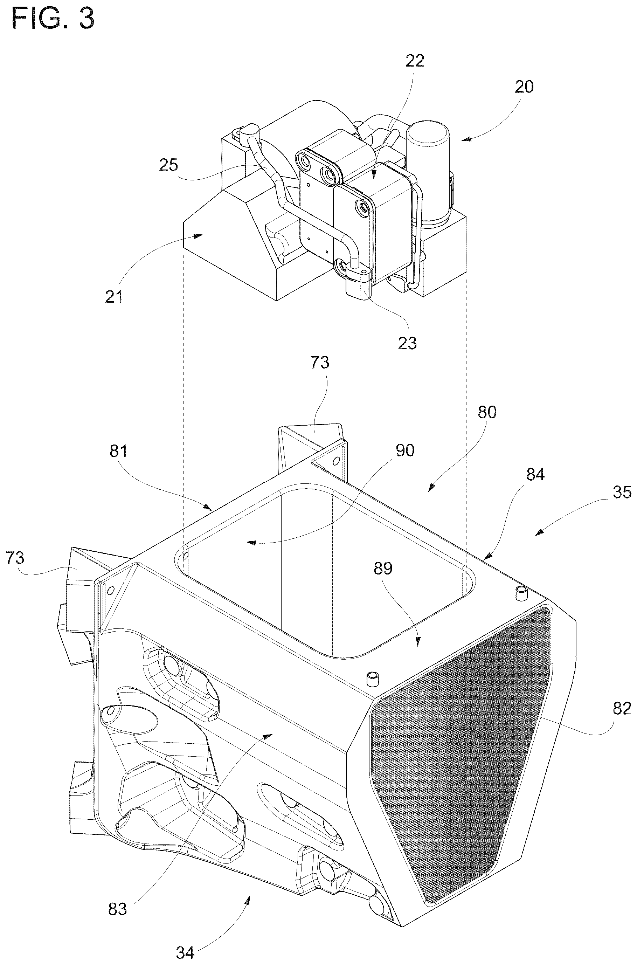

- Figure 3 an exploded perspective view and on a further enlarged scale of first components of an air conditioning system of the motor vehicle of Figure 1 housed in the rear portion of Figure 2;

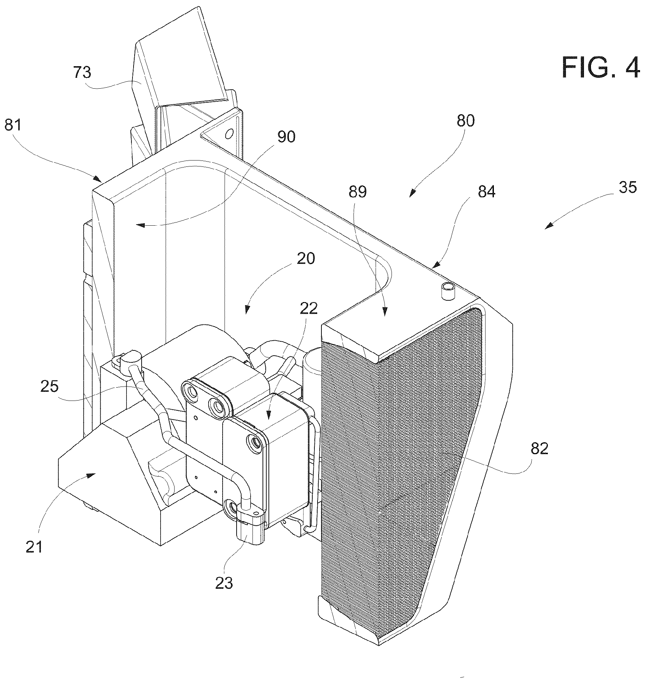

- Figure 4 shows in perspective view the first components of Figure 3, with parts removed for clarity;

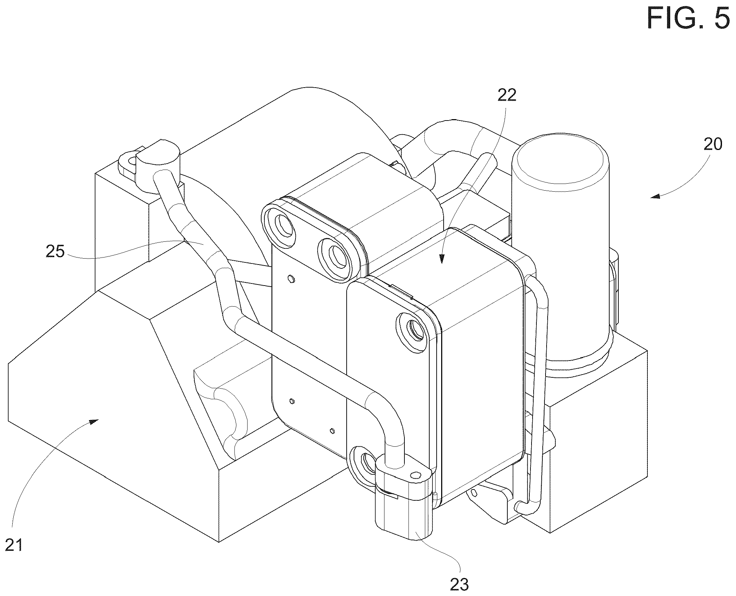

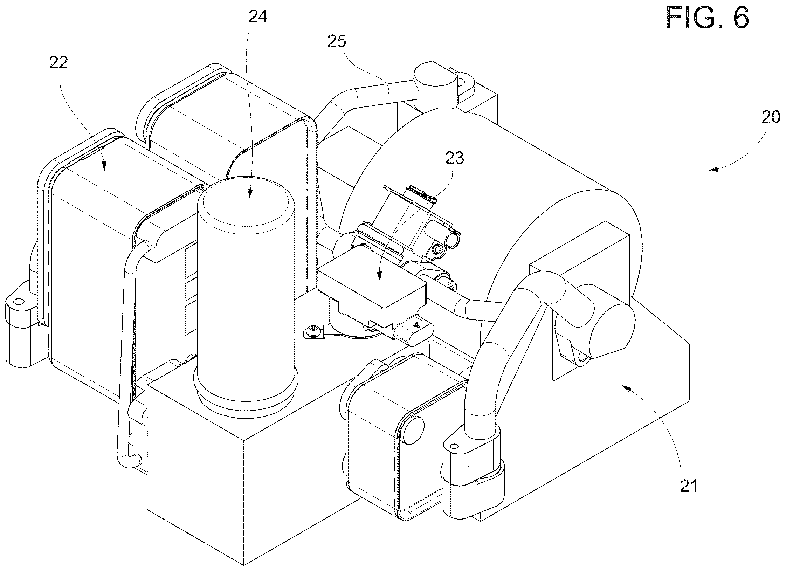

- Figures 5 and 6 show in perspective view and respective visual angles differing from one another of some of the first components of Figures 3 and 4;
- Figure 7 shows in perspective view the motor vehicle and the air conditioning system of Figures 1 to 6, with parts removed for clarity; and
- Figure 8 shows in schematic view the air conditioning system of Figures 1 to 7.

### DESCRIPTION OF EMBODIMENTS

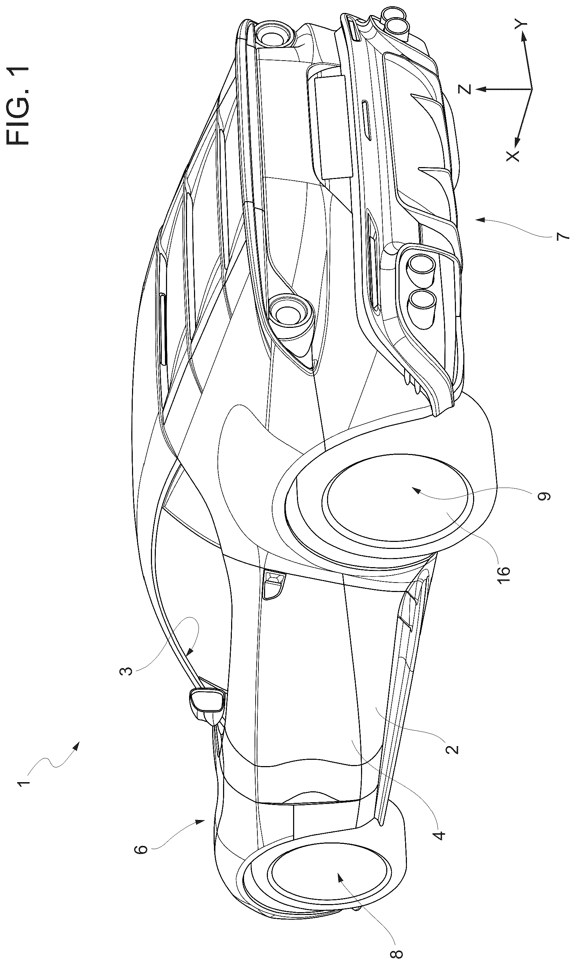

With reference to Figure 1, 1 denotes a motor vehicle. In greater detail, the motor vehicle 1 comprises:
- a body 2 delimiting a passenger compartment 3; and
- a pair of doors 4 hinged to the body 2 and a roof 5. The body 2 further comprises a front 5 and a rear 6. It is also possible to define:
- a longitudinal axis X integral with the motor vehicle 1, arranged, in use, horizontal and parallel to a normal travel direction of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

It should be noted that in the remainder of this description, expressions such as "above", "below", "front", "rear" and the like are used with reference to conditions of normal travel of the motor vehicle 1, wherein the latter travels parallel to the axis.

The motor vehicle 1 also comprises, with reference to the normal travel direction parallel to the axis X:
- a front axle 8; and
- a rear axle 9 comprising a pair of rear wheels 16.

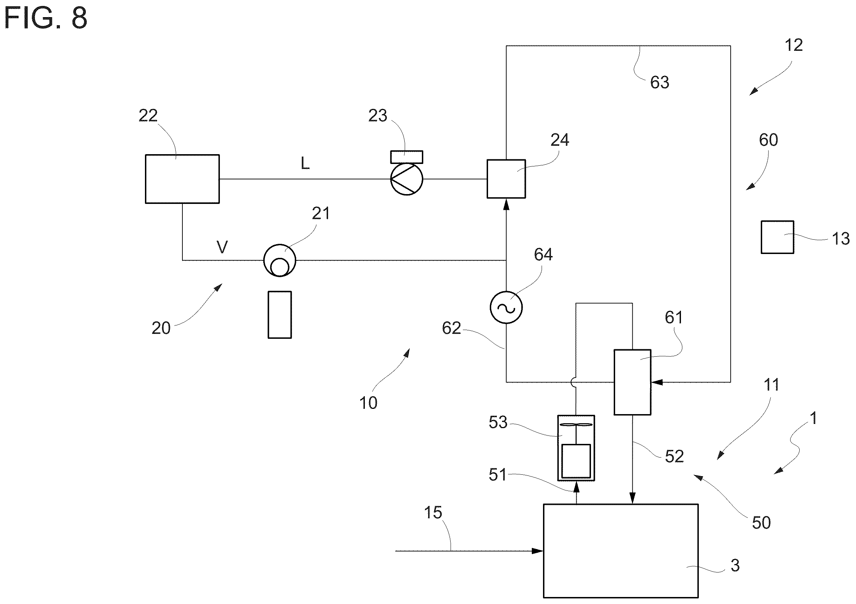

The motor vehicle 1 also comprises an air conditioning system 10 (only schematically in Figure 8), which is designed to adjust the temperature inside the passenger compartment 3, i.e. to maintain said temperature in a certain range of values.

More precisely, the system 10 comprises, as schematically shown in Figure 8:
- a group 11 for the delivery of "hot" air, i.e. at a temperature higher than the temperature inside the passenger compartment 3;
- a group 12 for the delivery of "cold" air, i.e. at a temperature lower than the temperature inside the passenger compartment 3; and
- a control unit 13 (only schematically shown in Figure 8) programmed to control the groups 11, 12 on the basis of thermal factors external to the convertiplane 1 and the desired temperature range to be reached inside the passenger compartment 3.

In greater detail, the group 11 is shown limited to a duct 15 for introducing the hot air into the passenger compartment 3.

In some embodiments, the group 12 could have some elements in common or thermally coupled with the group 11.

Without loss of generality, the group 12 is described below without reference to any mechanical or thermal coupling with the group 11.

The group 12 comprises (Figure 8):
- a circuit 20 closed and capable of being flown by a cooling fluid; and
- an air circulation circuit 50 fluidly connected to the passenger compartment 3.

In greater detail, the cooling fluid performs within the circuit 20 a thermodynamic cycle known as a vapour compression cycle.

During such a cycle, the cooling fluid flows within a duct 25 and undergoes a phase transition from liquid L to vapour V and vice versa.

The circuit 20 comprises, in sequence:
- a compressor 21, which is driven by an electric motor, compresses the cooling fluid in the vapour phase V;
- a condenser 22, which determines the transition of the cooling fluid from the vapour phase V to the liquid phase L;
- a lamination valve 23, which determines the transition of the cooling fluid to a two-phase condition formed by a mixture L+V of liquid L and vapour V; and
- an evaporator 24, which determines the transition of the cooling fluid from the two-phase condition L+V to the vapour phase V.

In particular, the cooling fluid absorbs heat from the outside inside the evaporator 24 and releases it to the outside inside the condenser 22.

The circuit 50 is open and comprises, in turn:
- an inlet 51 fluidly connected to the passenger compartment 3;
- a plurality of outlet vents 52 fluidly connected to the passenger compartment 3; and
- a fan 53 for creating an air circulation from the inlet 51 to the outlet vents 52.

As described in more detail below in the present description, the circuit 50 is thermally indirect with the circuit 20.

Advantageously, the group 12 comprises a further circuit 60 through which a heat transfer fluid can flow and which is thermally coupled to the circuits 20, 50, and the evaporator 24 is interposed along the circuit 20.

In the case shown, the heat transfer fluid is a mixture of water and glycol.

In greater detail, the group 12 further comprises a heat exchanger 61 interposed along the circuit 60 and along the circuit 50 between the inlet 51 and the vents 52.

The circuit 60 comprises, in particular:
- a portion 62 interposed between the evaporator 24 and the exchanger 61; and
- a portion 63 interposed between the exchanger 61 and the evaporator 24; and
- a pump 64 which can be operated to determine the flowing of the heat transfer fluid along the circuit 60.

In the case shown, the exchanger 61 is an air-water exchanger of known type.

The heat transfer fluid flows into the portion 62 at a first temperature greater than a second temperature with which it flows into the portion 63.

More in particular, the heat transfer fluid flowing in the portion 62 of the circuit 60 releases heat to the evaporator 24 being cooled from the first temperature to the second temperature.

The heat transfer fluid flowing in the portion 63 absorbs heat in the exchanger 61, being heated from the second temperature to the first temperature and cooling the air stream flowing from the inlet 51 to the vents 52.

The cooling fluid is in the case shown propane.

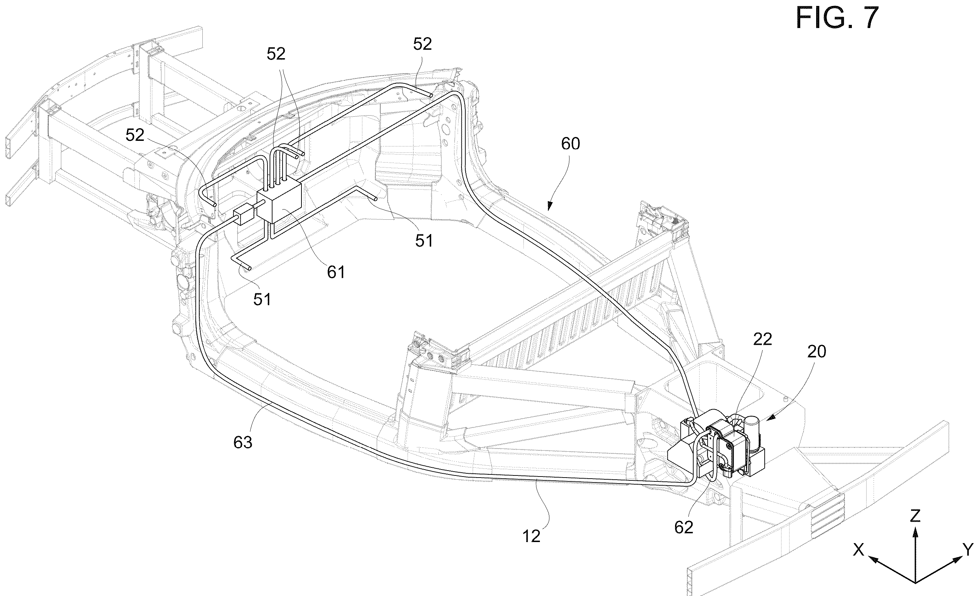

The front 6 of the body 2 is shown in Figure 7 limited to a pair of elongated spars 69 parallel to the axis X.

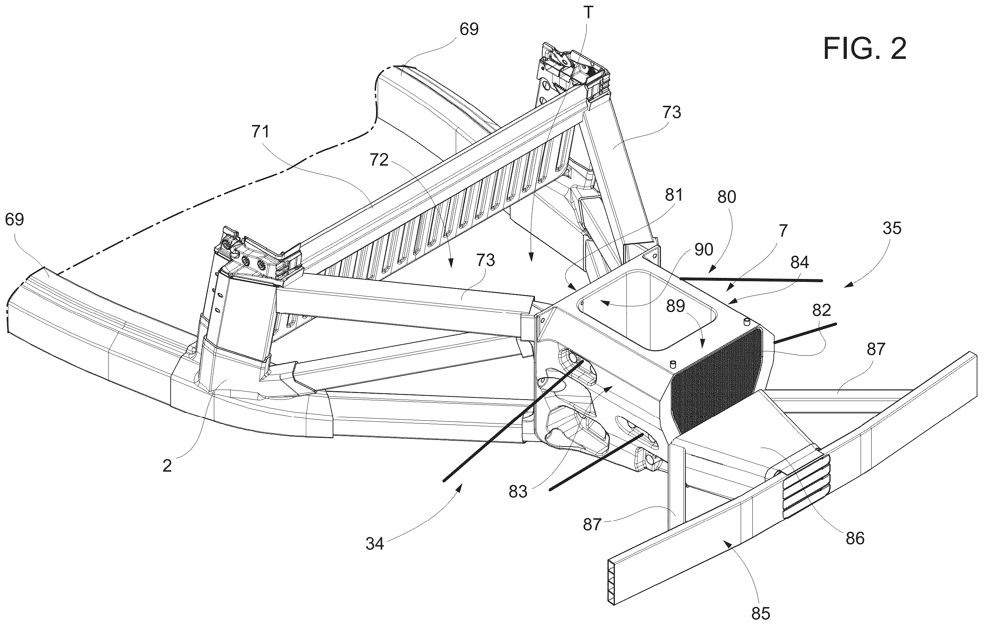

The rear 7 comprises, parallel to the axis X from the axle 8 to the axle 9 (Figure 2):
- a cross member 71 parallel to the axis Y;
- a tapered portion 72 having a width, measured parallel to the axis Y progressively decreasing from the axle 8 to the axle 9, and defining a pair of surfaces 73 opposite one another relative to the axis X; and
- a fixing structure 80 housing the compressor 21, the condenser 22, the lamination valve 23 and the evaporator 24.

In greater detail, the cross member 71 extends between the rear ends 59 of respective spars 69.

The surfaces 73 are, in this case, flat and lie on planes parallel to the axis Z and transverse to the axes X, Y.

The fixing structure 80 comprises, in turn:
- a pair of walls 81, 82, front and rear, respectively;
- a pair of lateral sides 83, 84 extending between the walls 81, 82; and
- an upper wall 89 extending between the walls 81, 82 and the sides 83, 84, and on which an opening 90 is obtained.

The walls 81, 82 lie on respective planes orthogonal to the axis X.

The sides 83, 84 mainly lie orthogonal to the axis Y.

The wall 89 lies orthogonal to the axis Z.

The cross member 71, the surfaces 73 and the wall 81 define, in plan view, i.e. in projection on a plane orthogonal to the axis Z, an isosceles trapezium T which is symmetric relative to the axis X.

More in particular, the projections on the plane orthogonal to the axis Z of the cross member 71 and of the wall 81 define respectively the larger base and the projections on this plane of the smaller base of the isosceles trapezium T and of the surfaces 73 define the oblique sides of the aforesaid isosceles trapezium T.

The extension of the cross member 71 along the axis Y is, therefore, greater than the extension of the wall 81 along the axis Y itself.

The rear 7 also comprises:
- a rear end cross member 85, having a development mainly parallel to the axis Y and arranged spaced along the axis X from the wall 82;
- a bracket 86 parallel to the axis X and interposed between the cross member 85 and the wall 82; and
- a pair of brackets 87 interposed between the cross member 85 and the wall 82 symmetrically to the axis X and converging with one another from the cross member 85 to the wall 82.

The bracket 86 is interposed between the brackets 87 parallel to the axis Y.

The motor vehicle 1 further comprises a pair of rear suspensions 34, 35 of known type and configured to elastically suspend the respective rear wheels 16 to the body 2.

Each rear suspension 34, 35 is articulated to the fixing structure 80 and is shown in Figure 2 limited to the relative attachment joints to the fixing structure 80 itself.

In use, the system 10 adjusts the temperature inside the passenger compartment 3, delivering "hot" air or "cold" air, depending on the conditions required by the occupants of the motor vehicle 1.

More in particular, the terms "hot" air and "cold" air mean respectively air at a temperature higher and lower than the temperature of the passenger compartment 3.

The operation of the system 10 is described below limited to the operation of the group 12 for the delivery of "cold air" inside the passenger compartment 3.

In greater detail, the fan 53 of the circuit 50 creates a continuous circulation of air from the inlet 51 to the outlet vents 52 through the evaporator 24 of the circuit 20 and the passenger compartment 3 of the motor vehicle 1.

The heat transfer fluid circulates at the first temperature value in the portion 62 of the circuit 60 and at the second temperature value in the portion 63 of the circuit 60.

The cooling fluid describes a vapour compression cycle within circuit 20, during which it undergoes the following thermodynamic transformations:
- is compressed in the vapour phase V inside the compressor 21;
- undergoes a transition from the vapour phase V to the liquid phase L within the condenser 22;
- is laminated so as to undergo a transition to a two-phase condition L+V in which it is a mixture of liquid L and vapour V; and
- evaporates, undergoing a transition from the two-phase condition L+V to the vapour phase V.

In greater detail, the cooling fluid releases heat at the condenser 22 and absorbs heat from the air circulating in the circuit 50 at the evaporator 24.

This heat absorption determines the cooling of the heat transfer fluid circulating in the portion 62 of the circuit 60 from the first temperature value to the second temperature value.

The heat transfer fluid circulating in the portion 62 absorbs the stream of "hot" air in the exchanger 61. Consequently, the stream of air releases heat and reaches the "cold" outlet vents 52 and the heat transfer fluid absorbs heat, returning to the first temperature value along the portion 61 of the circuit 60.

From an examination of the motor vehicle 1 realized according to the present invention, the advantages that it allows obtaining are evident.

In particular, the evaporator 24 of the circuit 20 is interposed along the circuit 60 so as to cool the heat transfer fluid from the first temperature value to the second temperature value in an area remote from the passenger compartment 3.

Thanks to this, the cooling of the stream of air flowing from the inlet 51 to the outlet vents 52 of the circuit 50 does not take place by direct exchange with the evaporator 24, but by heat exchange with the heat transfer fluid flowing along the portion 62 of the circuit 60 inside the exchanger 61.

It is thus possible to isolate the circuit 20 and, therefore, the cooling fluid in an area remote from the passenger compartment 3.

Thanks to this, it is also possible to use a flammable cooling fluid such as propane, with reduced risks for the occupants of the motor vehicle 1.

The circuit 20 is also housed within the fixing structure 80.

In this way, on the one hand, the presence of cooling fluid circulation ducts inside the motor vehicle is avoided and, on the other hand, the high impact resistance of the fixing structure 80 to house the circuit 20 is exploited.

This further reduces the risks of generating fire outbreaks, as a result of the use of propane or other particularly flammable cooling fluids in the circuit 20.

Moreover, the rear suspensions 34, 35 are articulated on the fixing structure 80.

It follows that the fixing structure 80 fully absorbs the loads from the rear wheels 16 and the rear suspensions 34, 35 to the body 2. In this way, the fixing structure 80 performs by means of a single component both the functions of housing some components of the suspensions 34, 35 and that of housing the circuit 20.

The rear 7 of the body 2 comprises, from the axle 8 towards the axle 9:
- the cross member 71 transverse to the axis X;
- the tapered portion 72 defining the surfaces 73 opposite one another; and
- the fixing structure 80 on which the rear suspensions 34, 35 are articulated.

This makes it possible to reduce the overall dimensions of the motor vehicle 1 parallel to the axis Y in the region of the axle 9, i.e. at the rear 7 of the body 2.

This reduction in the overall dimensions makes it possible to shape the body 2 - in particular the rear 7 - according to a more aerodynamic shape.

The cross member 71, the tapered portion 72 and the wall 81 of the fixing structure 80 define an outline shaped in plan like the trapezoid isosceles T. This shape easily allows to absorb in part a rear impact directed against the cross member 85.

The brackets 87 inclined relative to the axis X are effective in reducing the elastic instability of the bracket 86 parallel to the axis X in the event of a rear impact against the cross member 85 inclined relative to the axis X itself.

Finally, it is clear that modifications and variants can be made to the motor vehicle 1 according to the present invention which, however, do not fall outside the scope of protection defined by the claims.

The cooling fluid may be different from propane.

## Claims

1. - A motor vehicle (1) comprising:
- a body (2) defining a passenger compartment (3);
- a first circuit (20), through which a cooling fluid can flow and which comprises, in turn, a first aid heat exchanger (24), which can be supplied with said cooling fluid and is designed to allow said cooling fluid to releaser heat;
- a second circuit (50) fluidly connected to said passenger compartment (6);
said second circuit (50) comprising
- an inlet (51), which can fluidly be connected to said passenger compartment (3) and can be supplied with a stream of air to be cooled; and
- an outlet (52), which can fluidly be connected to said passenger compartment (3) and through which said cooled air stream can flow;
**characterized in that** it comprises a third circuit (60), through which a heat transfer fluid can flow and which is thermally coupled to said first and second circuits (20, 50);
said first heat exchanger (24) being interposed along said third circuit (60), so as to cool said heat transfer fluid.

2. **-** The motor vehicle according to claim 1, **characterized in that** it comprises:
- a second heat exchanger (61) interposed along said third circuit (60) and along said second circuit (50); said second heat exchanger (61) being interposed between said inlet (51) and said outlet (52);
- a first segment (62), which is interposed between said first heat exchanger (24) and said second heat exchanger (61) and through which, in use, said heat transfer fluid can flow at a first temperature; and
- a second segment (63), which is interposed between said second heat exchanger (61) and said first heat exchanger (24) and through which, in use, said heat transfer fluid can flow at a second temperature that is higher than said first temperature.

3. **-** The motor vehicle according to claim 1 or 2, **characterized in that** said body (2) comprises:
- a fixing structure (80) located behind said passenger compartment and at least partly housing said first circuit (20).

4. **-** The motor vehicle according to any one of the preceding claims, **characterized in that** said first circuit (20) is closed and can be flown through by a cooling fluid capable of changing phase and comprises, in sequence:
- compressor means (21), which can be supplied with said fluid in the vapour phase (V) and can be activated to raise the pressure of said cooling fluid in the vapour phase (V);
- a condenser (22), which is located downstream of said compressor means (21) with reference to the flowing direction of said cooling fluid in said first circuit (20), can be supplied with said cooling fluid in the vapour phase (V) and is designed to determine the transition of said cooling fluid from the vapour phase (V) to the liquid phase (L);
- lamination means (23), which are located downstream of said condenser (22) with reference to said flowing direction, can be supplied with said cooling fluid in the liquid phase (L) and are designed to determine the transition of said cooling fluid to a two-phase condition (L+V) formed by a mixture of a liquid phase (L) and a vapour phase (V); and
- an evaporator (24), which defines said first exchanger (24), is located downstream of said lamination means (23) and upstream of said compressor means (21) with reference to said flowing direction and is designed to determine the transition of said cooling fluid from said two-phase condition (L+V) to the vapour phase (V);
said compressor means (21), said condenser (22), said lamination means (23) and said evaporator (24) being housed inside said fixing structure (80).

5. **-** The motor vehicle according to one of the claims 3 or 4, **characterized in that** it comprises:
- a first axle (8) and a second axle (9) located at the front and at the back, respectively, with reference to a first longitudinal axis (X) of said motor vehicle (1);
- a first cross member (71), which is transverse to said first axis (X) and is located behind said passenger compartment (6);
- a tapered portion (72) having a width, measured parallel to a second axis (Y), progressively decreasing from said first axle (10) to said axle (15) parallel to said first axis (X) and defining a pair of surfaces (73) opposite one another relative to said first axis (X); said second axis (Y) being orthogonal to said first axis (X); and
- said fixing structure (80).

6. **-** The motor vehicle according to claim 5, **characterized in that** said first cross member (71), said tapered portion (72) and said fixing structure (80) have, in a view from the top parallel to a third axis (Z), which is orthogonal to said first and second axis (X, Y), an outline shaped like an isosceles trapezium (T), which is symmetric relative to said first axis (X).

7. **-** The motor vehicle according to any one of the claims from 3 to 6, **characterized in that** it comprises a second cross member (85) defining an end of said body (2) located at the back, with reference to a normal travel direction of said motor vehicle (1);
said second cross member (85) being connected to said fixing structure (80) by a pair of brackets (87) arranged symmetrically relative to said first axis (X) and inclined relative to said first axis (X).

8. **-** The motor vehicle according to any one of claims from 3 to 7, further comprising:
- a pair of wheels (16) carried by said second axle (9);
- a first rear suspension (34) connecting a wheel (16) and said body (2) in a movable manner; and
- a second rear suspension (35) connecting the other second wheel (16) and said body (2) in a movable manner;
said first and second suspensions (34, 35) being articulated on said fixing structure (80).

9. **-** The motor vehicle according to any one of the preceding claims, **characterized in that** said heat transfer fluid is a mixture of air and glycol; and/or **characterized in that** said cooling fluid is propane.
